# EUROPEAN PATENT APPLICATION

(11) **EP 4 591 990 A1**
(43) Date of publication of application: **30.07.2025**
(21) Application number: 24219285.4
(22) Date of filing: 12.12.2024
(51) Int. Cl.: B03C 1/033, B03C 1/14, B03C 1/28, B03C 1/30

(54) **FILTERING APPARATUS FOR REMOVING FOREIGN METAL SUBSTANCES FROM A SLURRY FOR MANUFACTURING AN ELECTRODE PLATE FOR A BATTERY**

(30) Priority: 26.01.2024 KR 20240012618
(71) Applicant: Samsung SDI Co., Ltd, Gyeonggi-do 17084 (KR)
(72) Inventor: Kim, Bohun, Yongin-si, Gyeonggi-do 17084 (KR); Lee, Sangho, Yongin-si, Gyeonggi-do 17084 (KR); Kim, Min-Sic, Yongin-si, Gyeonggi-do 17084 (KR); Lee, Hansol, Yongin-si, Gyeonggi-do 17084 (KR); Lee, Miyoung, Yongin-si, Gyeonggi-do 17084 (KR)
(74) Representative: Gulde & Partner

(57) **Abstract**

A slurry filtering device for a rechargeable battery is provided for removing foreign metal substances contained in a slurry for manufacturing an electrode plate for a battery. The slurry filtering device includes a slurry pipe in which a slurry flow path along which the slurry moves is formed and a collection space where foreign metal substances are collected on an interior wall; a first magnetic filtering unit installed at a position on one side of the collection space of the slurry pipe and filtering foreign metal substances contained in the slurry moving in a direction of the collection space; a second magnetic filtering unit installed on the slurry pipe at the collection space position and collecting foreign metal substances filtered in the first magnetic filtering unit into the collection space by magnetic force; and a sensor unit that checks the amount of foreign metal substances collected in the collection space.

## Description

### BACKGROUND OF THE INVENTION

### (a) Field of the Invention

The present disclosure relates to a slurry filtering device that can easily remove foreign metal substances contained in a slurry for manufacturing electrode plates for batteries.

### (b) Description of the Related Art

In general, foreign metal substances included in a slurry for manufacturing rechargeable battery plates may be dangerous in the resulting rechargeable batteries.

Accordingly, in order to remove foreign metal substances included in the slurry for manufacturing electrode plates, a process for filtering foreign metal substances in a slurry manufacturing process is repeated several times.

In order to remove foreign metal substances contained in the conventional slurry, a magnetic member is installed in a pipe through which the slurry moves, and the foreign metal substances contained in the slurry moving along the pipe are removed.

However, a task of removing the foreign metal substances included in the conventional slurry uses the installation of a magnetic member, making it difficult to smoothly remove foreign substances.

In addition, during a continuous removal process of the foreign metal substances included in the slurry, foreign substance contamination of magnetic members installed inside the pipe frequently occurs, and thus the removal work is necessary. However, during the removal work process, production of the slurry is stopped and filtering of the foreign substances is stopped, thus, there is a problem that the manufacturing process does not proceed smoothly.

### SUMMARY OF THE INVENTION

An embodiment is to provide a slurry filtering device for removing foreign metal substances contained in slurry for manufacturing an electrode plate for a battery using magnetic force of an electromagnet, with the device simultaneously allowing for cleaning and foreign metal substance removal.

An embodiment is a slurry filtering device for removing foreign metal substances contained in a slurry for manufacturing an electrode plate for a battery, and the slurry filtering device includes: a slurry pipe forming a flow path along which the slurry can move and a collection space where foreign metal substances can be collected on an interior wall; a first magnetic filtering unit positioned on one side of the collection space of the slurry pipe and configured to filter foreign metal substances contained in the slurry moving in a direction toward the collection space; a second magnetic filtering unit positioned on the slurry pipe at the collection space position and configured to collect foreign metal substances filtered by the first magnetic filtering unit into the collection space by magnetic force; and a sensor unit configured to check the amount of foreign metal substances collected in the collection space.

The first magnetic filtering unit may include: a filter unit positioned inside the slurry pipe and including a guide portion configured to guide movement of the slurryg in the direction toward the second magnetic filtering unit; and a magnetic member positioned in the slurry pipe and outside the filter unit.

The first filter unit may include: a filter body detachably positioned on the slurry pipe by a fastening member and spaced apart from the interior wall of the slurry pipe, the filter body being configured such that the slurry can move therethrough; and a guide portion positioned inside the filter body and expanding in the movement direction of the slurry.

The first guide portion may include a plurality of conical expanded guide tubes positioned inside the filter body.

The plurality of expanded guide tubes may include: a first guide tube that is positioned inside the first filter body and expands in a cone shape; and a second guide tube that is positioned away from an interior wall of the first guide tube and expands in a cone shape.

The filter body and the guide portion contain a permanent magnet.

Th magnetic member may be an electromagnet that is positioned outside of the slurry pipe at a position of the first filter unit and the electromagnetic is configured to apply magnetic force to foreign metal substances contained in the slurry.

The slurry pipe may include an expansion portion formed inside a part where the second magnetic filtering unit is positioned, the expansion portion forming the collection space where the foreign metal substances are collected.

The second magnetic filtering unit may include a second electromagnet positioned outside of the slurry pipe at the position of the expansion portion, the second electromagnet being configured to induce by magnetic force the foreign metal substances moving through the first magnetic filtering unit to move to the collection space.

The sensor unit may be positioned on the outside of the slurry pipe at the expansion portion position and the sensor unit may be an ultrasonic wave sensor configured to sense foreign metal substances collected in the collection space, and

The ultrasonic wave sensor may be positioned on an outer surface of the second electromagnet.

A plurality of the second electromagnets may be positioned in plurality while being spaced apart from each other on the outside of the slurry pipe at the expansion portion position.

A plurality of the ultrasonic wave sensors may be provided at the expansion portion position.

The plurality of ultrasonic wave sensor are positioned in the expansion portion at alternating positions with the plurality of second electromagnets.

The slurry pipe may include: a plurality of the first magnetic filtering unit and a plurality of the second magnetic filtering unit, a main pipe through which the slurry can move; a first branch pipe branching off from the main pipe at a first side of the first branch pipe and into which the slurry can flow, one of the first magnetic filtering units and one of the second magnetic filtering units being positioned with the first branch pipe; a second branch pipe branching off from the main pipe a first side of the second branch pipe and into which the slurry can flow, one of the first magnetic filtering units and one of the second magnetic filtering units being positioned with the second branch pipe; a discharge pipe where a second side of the first branch pipe and a second side of the second branch pipe are connected, the discharge pipe being configured to discharge the slurry from which foreign metal substances have been filtered; and a first opening and closing valve that opens and closes between the first branch pipe and a second opening and closing valve that opens and closes between the second branch pipe and the main pipe and between the first branch pipe and the second branch pipe and the discharge pipe.

The opening and closing valve may include a first opening and closing valve installed between the first branch pipe and the main pipe, a second opening and closing valve installed between the first branch pipe and the discharge pipe, a third opening and closing valve installed between the second branch pipe and the main pipe, and a fourth opening and closing valve installed between the second branch pipe and the discharge pipe.

The first opening and closing valve and the second opening and closing valve may be operated to open and close simultaneously, and the third opening and closing valve and the fourth opening and closing valve may be operated to open and close simultaneously.

The opening and closing operations of the first opening and closing valve and the second opening and closing valve and the third opening and closing valve and the fourth opening and closing valve may be alternated with each other.

A plurality of protrusion portions may be formed on an inner surface of an an expanded flow path.

The filter unit may include: a filter plate positioned inside the slurry pipe; and a plurality of guide tubes protruding from a side surface of the filter plate and through which the slurry can move.

A plurality of protrusion portions may be protruded from surfaces of the first guide tube and the second guide tube.

A plurality of through holes may be formed on side surfaces of the plurality of expanded guide tubes.

The through holes may be round shapes on the sides of the first guide tube and the second guide tube.

The through holes may be slit shapes on the side surfaces of the first guide tube and the second guide tube.

The through holes may be obliquely elongated relative to lengths of the first guide tube and the second guide tube.

The first magnetic filtering unit and the second magnetic filtering unit may be installed in plurality on the slurry pipe.

A slurry filtering method for a rechargeable battery according to embodiment includes: (a) filtering foreign metal substances contained in a slurry by magnetic force of the first filter unit installed inside the slurry pipe; (b) filtering foreign metal substances contained in the slurry moving along an interior wall of the slurry pipe and an outer surface of the first filter unit by magnetic force of the first magnetic member; and (c) applying magnetic force in the a second magnetic filtering unit to the slurry that has passed through the first filter unit and the first magnetic member to collect foreign metal substances into the collection space of the slurry pipe.

The slurry filtering method may further include (d) cleaning the slurry pipe when it is determined, using the sensor unit, that the foreign metal substances collected in the collection space exceed a predetermined amount.

The cleaning the slurry pipe may include: (d-1) controlling the opening and closing valve to open one of the first branch pipe or the second branch pipe to perform filtering of foreign metal substances; and (d-2) controlling the opening and closing valve to open the other one of the first branch pipe or the second branch pipe to perform filtering of foreign metal substances co.

According to the embodiment, foreign substances contained in slurry can be effectively removed by installing the first filtering unit and the second magnetic filtering unit in each pipe.

According to one embodiment, removal of foreign metal substances and pipe cleaning can be alternated as the slurry moves along the first and second branch pipes, and, thus foreign metal substance filtering is not interrupted during the cleaning process inside the pipe and the foreign metal matter removal can be effectively and efficiently carried out.

### BRIEF DESCRIPTION OF THE DRAWINGS

FIG. 1 schematically illustrates a state in which a slurry filtering device for a rechargeable battery according to a first embodiment of the present disclosure is installed.
FIG. 2 schematically illustrates a main portion in a state in which a first magnetic filtering unit and a second magnetic filtering unit are installed in a first branch pipe and a second branch pipe of FIG. 1.
FIG. 3 is a schematic cross-sectional view of a main portion in a state in which the first branch pipe and the second branch pipe of FIG. 1 are installed.
FIG. 4 is a schematic perspective view of the first filtering unit according to the first embodiment of the present disclosure.
FIG. 5 is a schematic perspective view of the first filtering unit according to a second embodiment of the present disclosure.
FIG. 6 is a schematic cross-sectional view of a state in which a protrusion portion is formed in a first filtering unit according to a third embodiment of the present disclosure.
FIG. 7 is a schematic cross-sectional view of a state in which a protrusion portion is formed in a first filter unit according to a fourth embodiment of the present disclosure.
FIG. 8 is a schematic perspective view of a first filter unit according to a fifth embodiment of the present disclosure.
FIG. 9 is a schematic perspective view of a first filter unit according to a sixth embodiment of the present disclosure.
FIG. 10 schematically illustrates a state in which a slurry filtering device for a rechargeable battery according to a seventh embodiment of the present disclosure is installed.
FIG. 11 is a cross-sectional view that schematically shows an installed state of a second magnetic filtering unit and a sensor unit according to an eighth embodiment of the present disclosure.
FIG. 12 is a schematic flowchart of a slurry filtering method for a rechargeable battery according to an embodiment of the present disclosure.

### DETAILED DESCRIPTION OF THE EMBODIMENTS

Hereinafter, the present disclosure will be described more fully hereinafter with reference to the accompanying drawings, in which embodiments of the invention are shown. As those skilled in the art will realize, the described embodiments may be modified in various different ways, all without departing from the scope of the present disclosure. The drawings and description are to be regarded as illustrative in nature and not restrictive. Like reference numerals designate like elements throughout the specification.

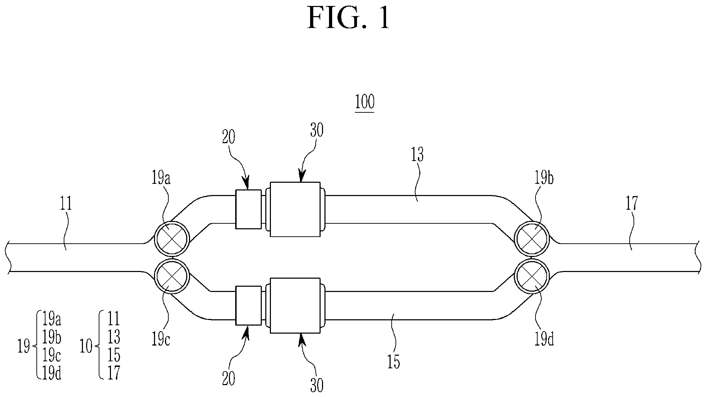

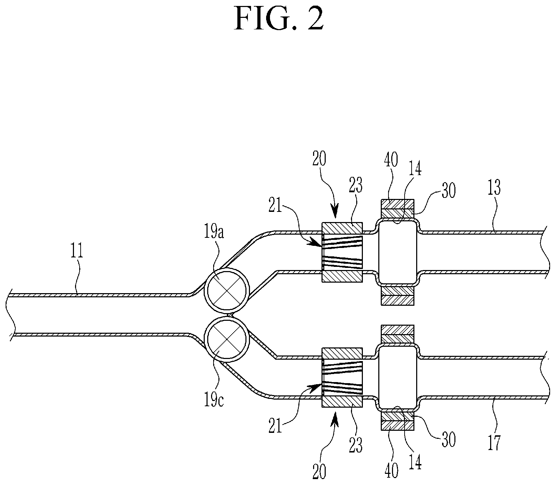

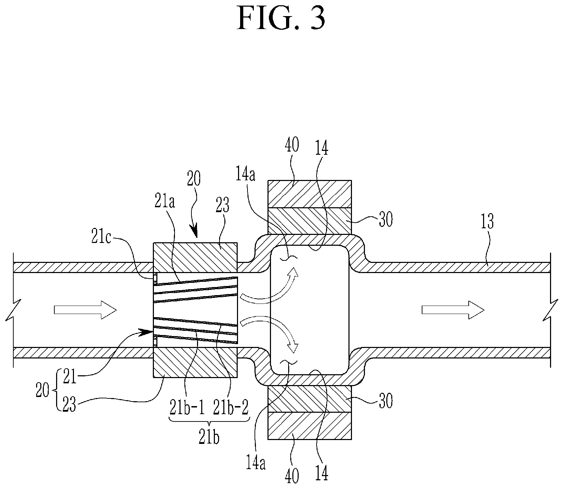

FIG. 1 schematically illustrates a state in which a slurry filtering device for a rechargeable battery according to a first embodiment of the present disclosure is installed, FIG. 2 schematically illustrates a main portion in a state in which a first magnetic filtering unit and a second magnetic filtering unit are installed in a first branch pipe and a second branch pipe of FIG. 1, and FIG. 3 is a schematic cross-sectional view of a main portion in a state in which the first branch pipe and the second branch pipe of FIG. 1 are installed.

As shown in FIG. 1 to FIG. 3, a slurry filtering device 100 for a rechargeable battery according to a first embodiment of the present disclosure is a slurry filtering device that removes foreign metal substances included in a slurry for manufacturing an electrode plate. The slurry filtering device 100 includes a slurry pipe 10 in which a slurry flow path through which slurry moves is formed and a collection space 14a where foreign metal substances are collected is formed on an inner wall. A first magnetic filtering unit 20 is installed at a position on one side of the collection space 14a of the slurry pipe 10 for filtering foreign metal substances contained in the slurry moving in the direction of the collection space 14a, a second magnetic filtering unit 30 is installed in the slurry pipe 10 at the position of the collection space 14a for collecting foreign metal substances filtered by the first magnetic filtering unit 20 into the collection space 14a by magnetic force, A sensor unit 40 checks the amount of foreign metal substances collected in the collection space 14a.

The slurry pipe 10 has a slurry flow path formed inside of the pipe through which the slurry containing foreign metal substances can move. The slurry pipe 10 may be installed for simultaneously cleaning the inside of the pipe and filtering foreign metal substances.

That is, the slurry pipe 10 may include a main pipe 11 through which the slurry moves, a first branch pipe 13 of which one side branches off from the main pipe 11, into which slurry flows, and the first magnetic filtering unit 20 and the second magnetic filtering unit 30 are installed, a second branch pipe 15 of which one side branches off from the main pipe 11, in which slurry flows, and the first magnetic filtering unit 20 and the second magnetic filtering unit 30 are installed, a discharge pipe 17 to which the other side of the first branch pipe 13 and the other side of the second branch pipe 15 are connected and through which slurry filtered out the foreign metal substances are discharged, and an opening/closing valve 19 that opens and closes the openings between the first branch pipe 13, the second branch pipe 15, the main pipe 11, the first branch pipe 13, the second branch pipe 15 and the discharge pipe 17.

The first branch pipe 13 and the second branch pipe 15 are connected to the main pipe 11, into which the slurry inflows, and, thus, the slurry may be selectively moved to the first branch pipe 13 or the second branch pipe 15. The slurry is moved from the main pipe 11 to the first branch pipe 13 or to the second branch pipe 15 to filter foreign metal substances contained in the slurry in one of the first branch pipe 13 and the second branch pipe 15 and to enable internal cleaning work in the other of the first branch pipe 13 and the second branch pipe 15. For this purpose, a first opening and closing valve 19a and a third opening and closing valve 19c, which constitute the opening and closing valve 19, may be installed between the first branch pipe 13 and the second branch pipe 15 and the main pipe 11.

The first magnetic filtering unit 20 and the second magnetic filtering unit 30 are installed in each of the first branch pipe 13 and the second branch pipe 15, and filtering of foreign metal substances included in the slurry is performed. Further, the discharge pipe 17, which is selectively connected by a second opening and closing valve 19b and a fourth opening and closing valve 19d, is connected to the first branch pipe 13 and the second branch pipe 15, and, thus, slurry with foreign metal substances filtered out may be discharged.

That is, when the filtering of the foreign metal substances is carried out in the first branch pipe 13, the first opening and closing valve 19a and the second opening and closing valve 19b may be open, and the third opening and closing valve 19c and the fourth opening and closing valve 19d may be closed. Therefore, filtering of foreign metal substances may be performed inside the first branch pipe 13, and cleaning work may be performed inside the second branch pipe 15. In addition, when filtering of foreign metal substances is performed in the second branch pipe 15, the third opening and closing valve 19c and the fourth opening and closing valve 19d may be open, and the first / second opening and closing valves 19a, and 19b may be closed. Therefore, filtering of foreign metal substances may be performed inside the second branch pipe 15, and cleaning work may be performed inside the first branch pipe 13.

The first magnetic filtering unit 20 and the second magnetic filtering unit 30 installed in each of the first branch pipe 13 and the second branch pipe 15 may have the same configuration and will be described in more detail below.

The first magnetic filtering unit 20 may be installed to primarily filter foreign metal substances contained in the slurry moving along the first branch pipe 13 and the second branch pipe 15. The first magnetic filtering unit 20 may include a first filter unit 21 including a first guide portion 21b that is removably installed inside the slurry pipe 10 and guides the movement of the slurry moving in the direction towards the second magnetic filtering unit 30, and a first magnetic member 23 installed on the slurry pipe 10 outside the first filter unit 21. The first filter unit 21 is installed on the first branch pipe 13, and the first filter unit 21 may be installed fixedly or detachably to the first branch pipe 13. The first filter unit 21 is formed from a magnetic material and may filter foreign metal substances contained in the slurry passing therethrough.

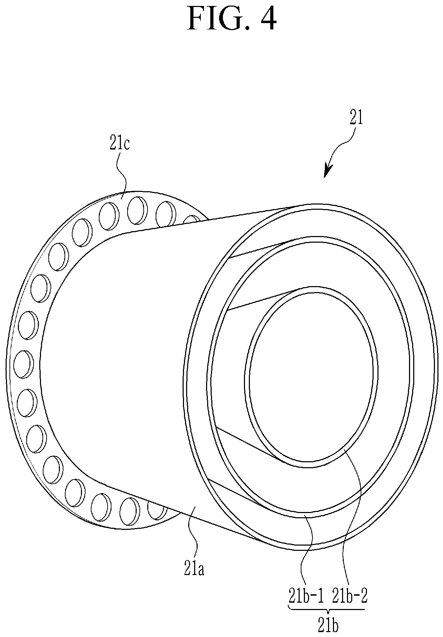

FIG. 4 is a schematic perspective view of the first filter unit according to the first embodiment of the present disclosure.

As shown in FIG. 4, first filter unit 21 may include a first filter body 21a installed inside the slurry pipe 10 and a first guide portion 21b installed inside the first filter body 21a. The first filter body 21a is spaced apart from interior walls of the first branch pipe 13 and the second branch pipe 15 that forms the slurry pipe 10, and slurry may move inside the first filter body 21a.

The first filter body 21a is formed of magnetic material and may be a permanent magnet. Thus, foreign metal substances contained in the slurry passing through the first filter body 21a may be separated from the slurry by magnetic force.

A flange portion 21c having a plurality of through holes protrudes from one side of the first filter body 21a, and an edge portion of the flange portion 21c is fixed in contact with an interior wall surface of the first branch pipe 13 or the second branch pipe 15 (depending on which pipe the magnetic filter unit 20 is installed on). The flange portion 21c may be fixed to the interior walls of the first branch pipe 13 or the second branch pipe 15 by welding. Alternatively, it is possible for the flange portion 21c to be fixed to the interior wall of the first branch pipe 13 or the second branch pipe 15 using a predetermined fastening member (not shown).

The first guide portion 21b that guides the movement of the slurry may protrude inside the first filter body 21a. The first guide portion 21bmay include a plurality of protruded structures, be spaced apart from the interior wall of the first filter body 21a, and may guide the movement of slurry in each of the first branch pipe 13 and the second branch pipe 15. The first guide portion 21b may be formed of a permanent magnet material, and, thus, foreign metal substances contained in the slurry passing through the first filter body 21a may be separated from the slurry by magnetic force. The first guide portion 21b may be formed as an expanded guide tube formed in a cone shape inside the first filter body 21a. Hereinafter, the same reference number are used for the first guide portion and the expanded guide tube.

The slurry may move with a slow flow velocity in the process of inflowing from one side of the expanded guide tube 21b and being discharged in the direction of the second magnetic filtering unit 30. Accordingly, foreign metal substances included in the slurry may be separated by magnetic force from the slow moving slurry along the first branch pipe 13 and the second branch pipe 15.

The expanded guide tube 21b may be installed in two pieces spaced apart from each other inside the first filter body 21a. But the number of the first guide portions 21b is not necessarily limited to two. Depending on the diameter of the first branch pipe 13 or the second branch pipe 15, an appropriate number of pieces may be used.

To be more specific, the expanded guide tube 21b may include a first guide tube 21b-1 inside the first filter body 21a and expanding in a conical shape, and a second guide tube 21b-2 spaced apart from the interior wall of the first guide tube 21b-1 and expanding in a cone shape. The first guide tube 21b-1 is installed on the interior wall surface of the first filter body 21a spaced apart from the interior wall surface, and the first guide tube 21b-1 may be formed in a cone shape that gradually expands in the direction of movement of the slurry.

The slurry may move in a space between an inner space of the first guide tube 21b-1 and the first filter body 21a. Thus, the flow velocity of the slurry may be gradually decreased as it progresses in the moving direction due to the conical shape of the first guide tube 21b-1.

A second guide tube 21b-2 may be installed inside the first guide tube 21b-1. The second guide tube 21b-2 is spaced apart from the interior wall surface of the first guide tube 21b-1, and the second guide tube 21b-2 may be formed in a cone shape similar to the first guide tube 21b-1.

Therefore, the slurry moves along a conical flow path that gradually expands between the inside of the second guide tube 21b-2 and the first guide tube 21b-1, and the flow viscosity of the slurry can be gradually decreased in the direction the slurry moves.

Because the first guide tube 21b-1 and the second guide tube 21b-2 are formed of a permanent magnet material, foreign metal included in the slurry that passes between the first filter body 21a and the first guide portion 21b with a decreased flow viscosity may be easily separated from slurry using magnetic force.

The first magnetic member 23 may be installed on the outer surface of the first branch pipe 13 and/or the second branch pipe 15 at the position where the first filter unit 21 is installed. The first magnetic member 23 may be a round shape along the circumference of the first branch pipe 13 and the second branch pipe 15 where the first filter unit 21 is installed, and may selectively apply magnetic force to the inside of the first branch pipe 13 or the second branch pipe 15. In other words, the first magnetic member 23 may be applied as a first electromagnet to enable selective application of magnetic force. As such, the first magnetic member 23 is capable of applying magnetic force to foreign metal substances included in the slurry passing through the first filter unit 21. Thus, the foreign metal substances can be easily separated from the slurry and be easily collected inside the expansion portion 14. In other words, the first magnetic member 23 may be installed to separate foreign metal substances contained in the slurry passing between the interior wall of the pipe and the first filter body 21a.

As described above, the flow viscosity of the slurry in the present embodiment is decreased as the slurry passes through the first and second guide tubes 21b-1 and 21b-2 of the first filter unit 21, and, thus, magnetic force of the first filter unit 21 and the first magnetic member 23 may be applied to the foreign metal substances included in the slurry. Thus, foreign metal substances may be separated from the slurry and be smoothly collected in the collection space.

The second magnetic filtering unit 30 may be installed in the slurry pipe 10 at the collection space positioned to collect foreign metal substances filtered by the first magnetic filtering unit 20 into the collection space by magnetic force. More specifically, the second magnetic filtering unit 30 may be a second electromagnet that is installed on the outside of the slurry pipe 10 at the expansion portion 14 forming the collection space. The second magnetic filtering unit 30 induces the foreign metal substances passing through the first filter unit 21 and the first magnetic filtering unit 20 into the collection space by magnetic force. In other words, the second magnetic filtering unit 30 may be installed to perform a second separation of foreign metal substances in the slurry that are not separated in the first magnetic member 23 and the first filter unit 21. Hereinafter, the same reference numbers are used for the second magnetic filtering unit and the second electromagnet.

The second electromagnet 30 may be a round shape installed along the circumference of the first branch pipe 13 or the second branch pipe 15 at the position where the expansion portion 14 is formed. Therefore, the second electromagnet 30 may be installed to selectively apply magnetic force inside each of the first branch pipe 13 and the second branch pipe 15.

Thus, foreign metal substances separated from the slurry passing through the first magnetic filtering unit 20 are moved to the position inside the expansion portion 14 by the magnetic force of the second electromagnet 30 and thus may be easily collected.

The sensor unit 40 may be installed to determine the collection amount of foreign metal substances collected in the collection space 14a of the slurry pipe 10.

The sensor unit 40 is installed outside of the second electromagnet 30 to check the amount of foreign metal substances collected in the collection space 14a in real-time. As an example, the sensor unit 40 is a round shape installed along the outer circumference of the second electromagnet 30. But sensor unit 40 is not limited to such a configuration, and it is also possible for the sensor unit 40 to be a pair of units on both opposite sides outside of the second electromagnet 30. The sensor unit 40 may be an ultrasonic wave sensor that can easily sense foreign metal substances. Alternatively, the sensor unit 40 may also be applied as an electronic sensor.

When the sensor unit 40 determines that the amount of collected foreign metal substances exceeds a predetermined amount, an alert may be transmitted to the worker such that the foreign metal substances can be removed.

As described above, when it is determined by sensing of the sensor unit that it is necessary to remove foreign metal substances from the second branch pipe 15, the opening and closing valve 19 may be controlled to close the second branch pipe 15 and filtering of the foreign metal substances is performed only in the first branch pipe 13. That is, when filtering of the foreign metal substances is performed in the first branch pipe 13, the first and second opening and closing valves 19a and 19b may be opened and the third and fourth opening and closing valves 19c and 19d may be closed. Therefore, filtering of the foreign metal substances may be performed inside the first branch pipe 13, and cleaning work may be performed inside the second branch pipe 15.

In addition, when the sensor unit 40 senses that foreign metal substances need to be removed from the first branch pipe 13, the opening and closing valve 19 is controlled to close the first branch pipe 13 and filtering of the foreign metal substances performed only in the second branch pipe 15. That is, when filtering of the foreign metal substances is performed in the second branch pipe 15, the third and fourth opening and closing valves 19c and 19d may be opened and the first and second opening and closing valves 19a and 19b may be closed. Therefore, filtering of the foreign metal substances may be performed inside the second branch pipe 15, and cleaning work may be performed inside the first branch pipe 13.

As described above, the slurry filtering device 100 for a rechargeable battery in the present disclosure can effectively remove foreign substances contained in the slurry by use of the first magnetic filtering unit 20 and the second magnetic filtering unit 30 in the pipe. Further, since alternating foreign metal substance removal work and pipe cleaning work is possible as the slurry moves along the first branch pipe 13 and the second branch pipe 15, the foreign metal substances filtering work is not interrupted during the cleaning process inside the pipe, thereby enabling effective foreign metal substances removal work.

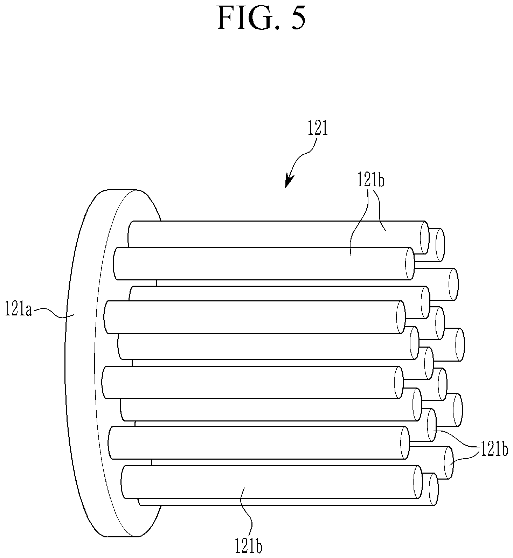

FIG. 5 is a schematic perspective view of a first filter unit according to a second embodiment of the present disclosure. The same reference numbers as used in FIG. 1 to FIG. 4 refer to the same or similar members in FIG. 5. Thus, a further detailed description of the same reference numbers will be omitted.

As shown in FIG. 5, a first filter unit 121 according to the second embodiment of the present disclosure may include a filter plate 121a installed inside the slurry pipe 10 and a plurality of guide tubes 121b protruding from a side surface of the filter plate 121a, with the slurry moving through the filter plate 121a and guide tubes 121b. The filter plate 121a may be fixed by welding and the like inside a first branch pipe 13 and a second branch pipe 15 that form a slurry pipe 10. And the plurality of guide tubes 121b may be installed in a protruded state on the filter plate 121a. The plurality of guide tubes 121b protrude in the direction of movement of the slurry on one side of the filter plate 121a, and the slurry may move inside the plurality of guide tubes 121b.

Foreign metal substances contained in the slurry moving along the slurry pipe 10 may separate by magnetic force while the slurry passes through the plurality of guide tubes 121b. Here, the separated foreign metal substances may be further moved by the flow viscosity of the slurry and collected inside a collection space 14a at the position of the second magnetic filtering unit 30.

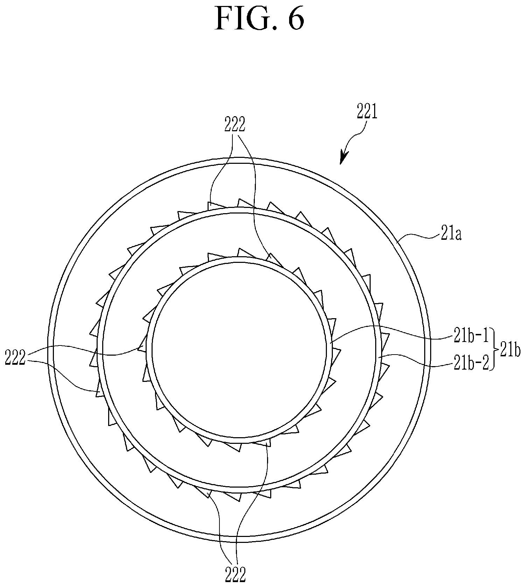

FIG. 6 is a schematic cross-sectional view of a state in which protrusion portions are formed in a first filter unit according to a third embodiment of the present disclosure. The same reference numbers as used in FIG. 1 to FIG. 5 refer to the same or similar members in FIG. 6. Thus, a further detailed description of the same reference numbers will be omitted.

As shown in FIG. 6, a plurality of protrusion portions 222 protrude from surfaces of a first guide tube 21b-1 and a second guide tube 21b-2 of the first filter unit 221 according to the third embodiment of the present disclosure. The protrusion portions 222 protrude on each surface of the first guide tube 21b-1 and the second guide tube 21b-2 interfere with foreign metal substances contained in the slurry. It is therefore possible for foreign metal substances to be more easily separated from the slurry and collected by interference with the protrusion portions 222. As shown in FIG. 6, the protrusion portions 222 may be protruded in multiple shapes.

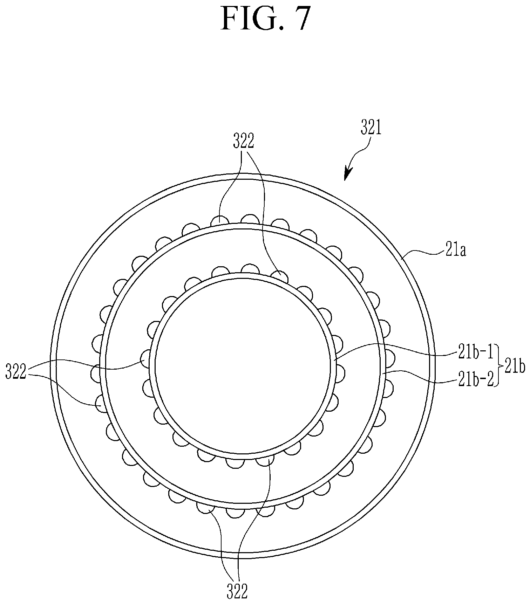

FIG. 7 is a schematic cross-sectional view of a state in protrusion portions are formed in a first filter unit according to a fourth embodiment of the present disclosure.

As shown in FIG. 7, a plurality of protrusion portions 322 may be protruded from surfaces of a first guide tube 21b-1 and a second guide tube 21b-2 of the first filter unit 321 according to the fourth embodiment of the present disclosure. The protrusion portions 322 may be a round shape on each surface of the first guide tube 21b-1 and the second guide tube 21b-2.

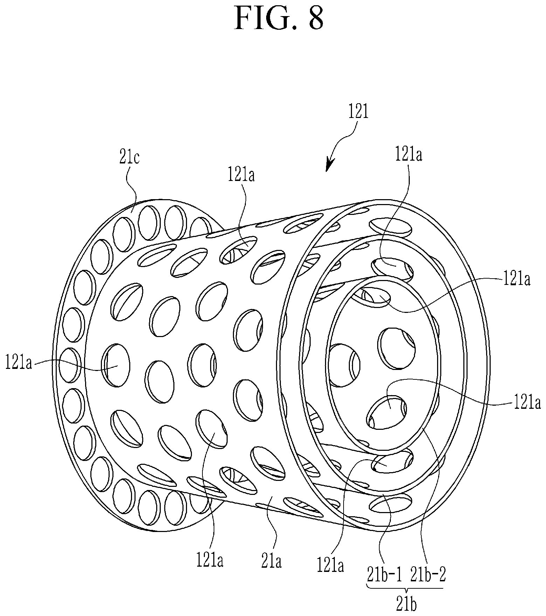

FIG. 8 is a schematic perspective view of a first filter unit according to a fifth embodiment of the present disclosure. The same reference numbers as used in FIG. 1 to FIG. 7 refer to the same or similar members in FIG. 8. Thus, a further detailed description of the same reference numbers will be omitted.

As shown in FIG. 8, in a first filter unit 21 according to the fifth embodiment of the present disclosure, a plurality of through holes 121a may be formed on a side surface of an expanded guide tube 21b. The through holes 121a may be a plurality of round shapes on each side of the first guide tube 21b-1 and the second guide tube 21b-2. The through holes 121a may be formed on the side surfaces of the first guide tube 21b-1 and the second guide tube 21b-2. The slurry moving along the slurry pipe 10 may therefore easily flow in and out of the first and second guide tubes 21b-1 and 21b-2 through the through holes 121a, thereby carrying out filtering of foreign metal substances contained in the slurry.

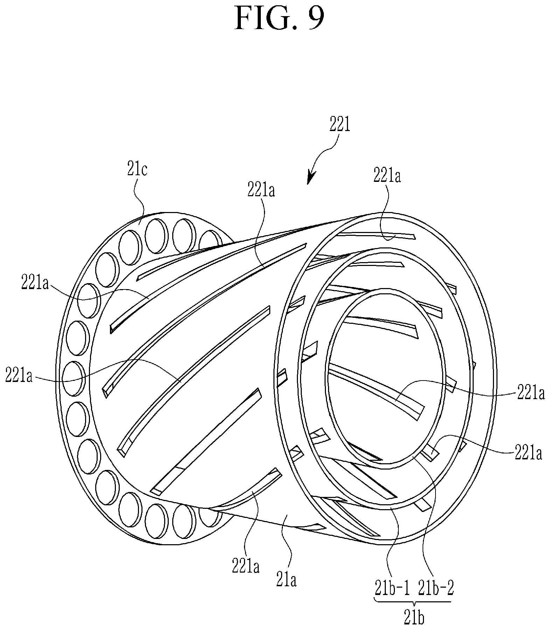

FIG. 9 is a schematic perspective view of a first filter unit according to a sixth embodiment of the present disclosure. The same reference numbers as used in FIG. 1 to FIG. 8 refer to the same or similar members in FIG. 9. Thus, a further detailed description of the same reference numbers will be omitted.

As shown in FIG. 9, in a first filter unit 121 according to a sixth embodiment of the present disclosure, a plurality of through-holes 221a may be formed on a side surface of an expanded guide tube 21b. The plurality of through holes 221a may be formed in a slit shapes with a long length in a first direction on each side surface of a first guide tube 21b-1 and a second guide tube 21b-2. The through holes 221a may have different lengths corresponding to the respective diameters of the first guide tube 21b-1 and the second guide tube 21b-2. As the through-holes 221a are formed on the side surface of each of the first guide tube 21b-1 and the second guide tube 21b-2, slurry moving along the slurry pipe 10 may easily flow in and out of the first guide tube 21b-1 and the second guide tube 21b-2 through the through hole 221a, thereby filtering out foreign metal substances contained in the slurry.

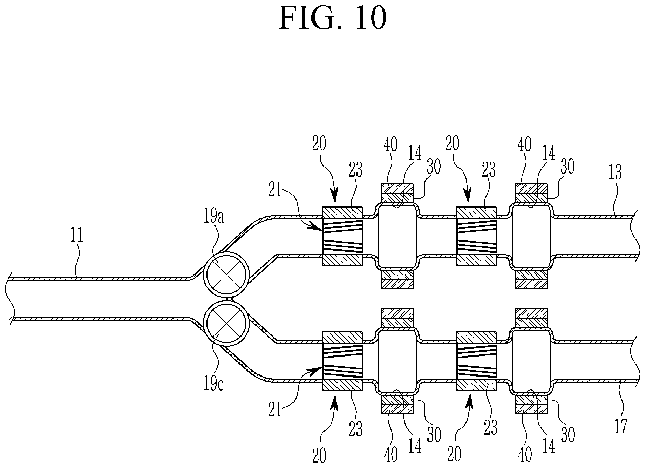

FIG. 10 schematically illustrates a state in which a slurry filtering device for a rechargeable battery according to a seventh embodiment of the present disclosure is installed. The same reference numbers as used in FIG. 1 to FIG. 9 refer to the same or similar members in FIG. 10. Thus, a detailed description of the same reference numbers will be omitted.

As shown in FIG. 10, in a slurry filtering device 300 for a rechargeable battery according to a seventh embodiment of the present disclosure, a plurality of first magnetic filtering units 20 and a plurality of second magnetic filtering units 30 may be installed in plurality in a slurry pipe 10. The first magnetic filtering units 20 and the second magnetic filtering units 30 are installed as a pairs spaced apart from each other in the slurry pipe 10. Thus, filtering of foreign metal substances included in the slurry may be performed more effectively.

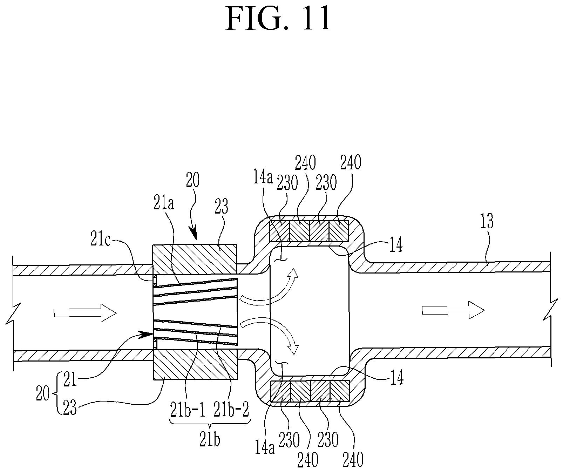

FIG. 11 is a cross-sectional view that schematically shows an installed state of a second magnetic filtering unit and a sensor unit according to an eighth embodiment of the present disclosure. The same reference numbers as used in FIG. 1 to FIG. 10 refer to the same or similar members in FIG. 11. Thus, a further detailed description of the same reference numbers will be omitted

As shown in FIG. 11, second electromagnets 230 according to an eighth embodiment of the present disclosure may be installed as a pair spaced apart from each other on the outside of a slurry pipe 10 at a position of an expansion portion 14. An ultrasonic wave sensor 240 is installed on the slurry pipe 10 between and outside the pair of second electromagnets 230. The ultrasonic wave sensor 240 may be installed on the slurry pipe 10 by being alternately placed with the pair of second electromagnets 230. As the pair of second electromagnets 230 and the pair of ultrasonic wave sensors 240 are installed on a surface outside the slurry pipe 10 in an alternating state, the pair of second electromagnets 230 are able to apply stable magnetic force to foreign metal substances included in the slurry. In addition, the pair of ultrasonic wave sensors 240 is installed closer to a slurry flow path, and, thus, the ultrasonic wave sensors 240 more accurately measure whether the collected amount of foreign metal substances exceeds the predetermined amount and, when necessary, can thereby alert workers to remove foreign metal substances.

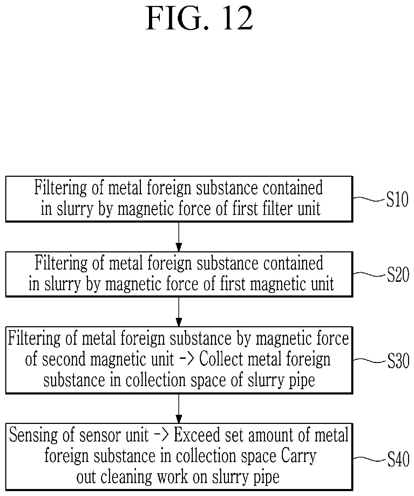

FIG. 12 is a schematic flowchart of a slurry filtering method for manufacturing an electrode of a battery according to an embodiment of the present disclosure.

First, foreign metal substances contained in slurry are filtered by magnetic force of a first filter unit 21 installed inside a slurry pipe 10 (step S10). In step S10, foreign metal substances contained in the slurry, which has a decreased flow viscosity as it passes through the inside of the cone-shaped first filter unit 21 of permanent magnet material, may be separated by the magnetic force of the first filter unit 21.

Next, foreign metal substances contained in the slurry moving between an inner wall surface of the slurry pipe 10 and an external surface of the first filter unit 21 are filtered by magnetic force of a first magnetic member 23 (S20). In step S20, the foreign metal substances may be separated by applying the magnetic force of the first magnetic member 23 (formed by an electromagnet) to the slurry moving inside the slurry pipe 10.

Subsequently, the magnetic force of the second magnetic filtering unit 30 is applied to the slurry that has passed through the first filter unit 21 and the first magnetic member 23, and foreign metal substances are collected into a collection space 14a of the slurry pipe 10 (S30). In step S30, the foreign metal substances not removed in steps S10 and S20 are removed from the slurry, and the foreign metal substances may be collected in the expanded collection space 14a formed in the slurry pipe 10 by separating the foreign metal substances contained in the slurry by the magnetic force of the second magnetic filtering unit 30.

Next, when it is confirmed that the amount of the foreign metal substances collected in the collection space 14a exceeds a predetermined amount using the sensor unit 40, cleaning of the collection space 14a is performed (step S40). In step S40, when it is determined that it is necessary to remove foreign metal substances from the first branch pipe 13 by sensing of the sensor unit 40, the opening and closing valve 19 is controlled to close the first branch pipe 13 and foreign metal substances are removed from inside first branch pipe 13. In this case, the removal of the foreign metal substances from the slurry may be performed as normal inside the second branch pipe 15. Further, when it is necessary to remove foreign metal substances from the second branch pipe 15, the opening and closing valve 19 is controlled to close the second branch pipe 15 and foreign metal substances are removed from inside the second branch pipe 15. In this case, the removal of the foreign metal substances from the slurry may be performed as normal inside the first branch pipe 13.

While this disclosure has been described in connection with what is presently considered to be practical embodiments, it is to be understood that the disclosure is not limited to the disclosed embodiments. Rather, it is intended to cover various modifications and equivalent arrangements included within the scope of the appended claims.

### <Description of symbols>

| | | | |
|---|---|---|---|
| 10 | slurry pipe | 11 | main pipe |
| 13 | first branch pipe | 14 | expansion portion |
| 14a | collection space | 15 | second branch pipe |
| 17 | discharge pipe | 19 | opening and closing valve |
| 19a | first opening and closing valve | | |
| 19b | second opening and closing valve | | |
| 19c | first opening and closing valve | | |
| 19d | second opening and | | closing valve |
| 20 | first magnetic filtering unit | 21, 121, 221, 321 | first filter unit |
| 21a | first filter body | 21b | expanded guide tube, first guide portion |
| 21b-1. | first guide tube | 21b-2. | second guide tube |
| 23 | first magnetic member | | |
| 30, 230 | second magnetic filtering unit, second electromagnet | | |
| 40, 240 | sensor unit | 222, 322 | protrusion portion |
| 121a, 221a | through-hole | | |

## Claims

1. A slurry filtering device (100, 300) for removing foreign metal substances contained in a slurry for manufacturing an electrode plate for a battery, the slurry filtering device (100, 300) comprising:
a slurry pipe (10) forming a flow path along which the slurry can move and a collection space (14a) where foreign metal substances can be collected on an interior wall;
a first magnetic filtering unit (20) positioned on one side of the collection space (14a) of the slurry pipe (10) and configured to filter foreign metal substances contained in the slurry moving in a direction toward the collection space (14a);
a second magnetic filtering unit (30) positioned on the slurry pipe (10) at a position of the collection space (14a) and configured to collect foreign metal substances filtered by the first magnetic filtering unit (20) into the collection space (14a) by magnetic force; and
a sensor unit (40) configured to check the amount of foreign metal substances collected in the collection space (14a).

2. The slurry filtering device (100, 300) of claim 1, wherein the first magnetic filtering unit (20) comprises:
a first filter unit (21, 121, 221, 321) positioned inside the slurry pipe (10) and including a guide portion (21b, 121b, 221b, 321b) configured to guide movement of the slurry in the direction toward the second magnetic filtering unit (30); and
a first magnetic member (23) positioned in the slurry pipe (10) and outside the first filter unit (21, 121, 221, 321).

3. The slurry filtering device (100, 300) of claim 2, wherein the first filter unit (21) comprises:
a filter body detachably positioned on the slurry pipe (10) by a fastening member and spaced apart from the interior wall of the slurry pipe (10), and filter body being configured such that the slurry can move therethrough; and
a guide portion positioned inside the filter body and expanding in the movement direction of the slurry.

4. The slurry filtering device (100, 300) of claim 3, wherein the guide portion comprises a plurality of conical expanded guide tubes (121b) positioned inside the filter body, and
wherein the plurality of expanded guide tubes (121b) comprise:
a first guide tube (21b-1) that is positioned inside the filter body and expands in a cone shape, and
a second guide tube (21b-2) that is positioned away from an interior wall of the first guide tube (21b-1) and expands in a cone shape, and/or
wherein the slurry pipe (10) includes an expansion portion (14) formed inside a part where the second magnetic filtering unit (30) is positioned, the expansion portion (14) forming the collection space (14a) where the foreign metal substances are collected.

5. The slurry filtering device (100, 300) of claim 3 or 4, wherein the filter body and the guide portion contain a permanent magnet, or , wherein the magnetic member is an electromagnet that is positioned outside of the slurry pipe (10) at a position of the first filter unit (21, 121, 221, 321), the electromagnet is configured to apply magnetic force to foreign metal substances contained in the slurry.

6. The slurry filtering device (100, 300) of claim 5,
wherein the electromagnet is a first electromagnet, and
wherein the second magnetic filtering unit (30) comprises a second electromagnet (230) positioned outside of the slurry pipe (10) at the position of the expansion portion (14), the second electromagnet (230) being configured to induce by magnetic force the foreign metal substances moving through the first magnetic filtering unit (20) to move to the collection space (14a).

7. The slurry filtering device (100, 300) of claim 6, wherein the sensor unit (40) is positioned outside of the slurry pipe (10) at the expansion portion (14) position, the sensor unit (40) being an ultrasonic wave sensor (240) configured to sense foreign metal substances collected in the collection space (14a), and
wherein the ultrasonic wave sensor (240) is positioned on an outer surface of the second electromagnet (230), and/or wherein a plurality of the ultrasonic wave sensor (240) are provided at the expansion portion (14) position, and
wherein the plurality of ultrasonic wave sensors (240) are positioned in the expansion portion (14) at alternating positions with a plurality of the second electromagnet (230).

8. The slurry filtering device (300) of any of the preceding claims , wherein:
the slurry pipe (10) comprises:
a plurality of the first magnetic filtering unit (20) and a plurality of the second magnetic filtering unit (30),
a main pipe (11) through which the slurry can move;
a first branch pipe (13) branching off from the main pipe (11) at a first side of the first branch pipe (13) and into which the slurry can flow, one of the first magnetic filtering units (20) and one of the second magnetic filtering units (30) being positioned with the first branch pipe (13);
a second branch pipe (15) branching off from the main pipe (11) at a first side of the second branch pipe (15) and into which the slurry can flow, one of the first magnetic filtering units (20) and one of the second magnetic filtering units (30) being positioned with the second branch pipe (15);
a discharge pipe (17) where a second side of the first branch pipe (13) and a second side of the second branch pipe (15) are connected, the discharge pipe (17) being configured to discharge the slurry from which foreign metal substances have been filtered;
a first opening and closing valve (19a) that opens and closes between the first branch pipe (13), the second branch pipe (15) and the main pipe (11); and
a second opening and closing vale the opens between the first branch pipe (13) and the second branch pipe (15) and the discharge pipe (17).

9. The slurry filtering device (100, 300) of claim 8, wherein the opening and closing valves (19) are opened and closed such that slurry flow can be alternated between the first branch pipe (13) and the second branch pipe (15).

10. The slurry filtering device (100, 300) of any of claims 2 to 9, wherein:
the first filter unit (21) comprises:
a filter plate positioned inside the slurry pipe (10); and
a plurality of guide tubes (121b) protruding from a side surface of the filter plate and through which the slurry can move.

11. The slurry filtering device (100, 300) of any of claims 4 to 10, wherein a plurality of protrusion portions (222, 322) protrude from surfaces of the first guide tube (21b-1) and the second guide tube (21b-2), and/or , wherein a plurality of through holes are formed on side surfaces of the plurality of expanded guide tubes (121b).

12. The slurry filtering device (100, 300) of claim 11, wherein the plurality of through holes have round shapes on the sides of the first guide tube (21b-1) and the second guide tube (21b-2), or , wherein the plurality of through holes have slit shapes on the side surfaces of the first guide tube (21b-1) and the second guide tube (21b-2), and
the plurality of through holes are obliquely elongated relative to lengths of the first guide tube (21b-1) and the second guide tube (21b-2).

13. A slurry filtering method using the slurry filtering device (100, 300) of any of the preceding claims, the method comprising:
filtering foreign metal substances contained in a slurry by magnetic force in the first filter unit (21, 121, 221, 321); and
applying magnetic force in the second magnetic filtering unit (20) to the slurry that has passed through the first filter unit (21, 121, 221, 321) to collect the filtered foreign metal substances into the collection space (14a) of the slurry pipe (10).

14. The slurry filtering method of claim 13, further comprising cleaning the slurry pipe (10) when it is determined, using the sensor unit (40), that the foreign metal substances collected in the collection space (14a) exceed a predetermined amount.

15. The slurry filtering method of claim 14, wherein the cleaning the slurry pipe (10) comprises:
controlling an opening and closing valve (19) to open one of a first branch pipe (13) or a second branch pipe (15) to perform filtering of foreign metal substances; and
controlling the opening and closing valve (19) to open the other one of the first branch pipe (13) or the second branch pipe (15) to perform filtering of foreign metal substances.
